# EUROPÄISCHE PATENTSCHRIFT

(11) **EP 3 757 308 B1**
(45) Veröffentlichungstag und Bekanntmachung des Hinweises auf die Patenterteilung: **03.01.2024**
(21) Anmeldenummer: 20000215.2
(22) Anmeldetag: 16.06.2020
(51) Int. Cl.: E04B 1/76, F16B 13/12, E04F 13/08, E04D 3/36, F16B 43/00

(54) **HALTER FÜR DAS FIXIEREN EINER DÄMMSTOFFSCHICHT**
HOLDER FOR FIXING AN INSULATING LAYER
SUPPORT POUR LA FIXATION D'UNE COUCHE ISOLANTE

(30) Priorität: 27.06.2019 AT 2362019
(43) Veröffentlichungstag der Anmeldung: 30.12.2020
(73) Patentinhaber: SIHGA GmbH, 4694 Ohlsdorf (AT)
(72) Erfinder: Kaiser-Mühlecker, Benedikt, 4531 Kematen an der Krems (AT); Gruber, Johann, 4842 Zell am Pettenfirst (AT); Schauer, Robert, 4655 Vorchdorf (AT)

(56) Entgegenhaltungen:
- EP-A1- 2 924 302
- DE-A1-102010 048 537
- DE-A1-102012 106 311
- DE-U1- 9 410 723
- GB-A- 558 097
- US-A1- 2008 145 180

## Beschreibung

Die Erfindung betrifft einen Halter für das Fixieren einer Dämmstoffschicht an einer Gebäudefläche.

Die Schriften DE 8534738 U, EP 0644301 A2 und EP 1693530 B1 zeigen jeweils einen Halter, welcher aus einem Kunststoffteil und einem metallischen Befestigungselement besteht. Dabei umfasst der Kunststoffteil jeweils eine im Wesentlichen rohrförmige Hülse und einen im Wesentlichen kreisscheibenförmigen Halteteller, wobei die beiden Teile miteinander monolithisch verbunden sind, koaxial zueinander angeordnet sind und der Halteteller an eine Stirnseite der Hülse anschließt. Das metallische Befestigungselement ist jeweils eine Art Nagel oder Schraube. In montiertem Zustand erstreckt sich die Hülse durch die Dämmstoffschicht hindurch und der Halteteller liegt bündig mit der äußeren Oberfläche zu der lokal etwas komprimierten Dämmstoffschicht. Das Befestigungselement erstreckt sich durch den zentralen Hohlraum im Kunststoffteil hindurch und in den hinter der Isolierschicht liegenden festen Gebäudeteil - typischerweise Mauerwerk oder Unterkonstruktion - hinein. Auch der Kopf des Befestigungselements befindet sich im zentralen Hohlraum des Kunststoffteils.

Gemäß der genannten Schrift DE 8534738 U wird bei der Montage der Kunststoffteil mit der vom Halteteller abgewandten Stirnseite der Hülse voran durch die Isolierschicht hindurchgedrückt. Problematisch ist vor allem die beim Eintreiben des Kunststoffteils stattfindende Verformung und Verdichtung der Dämmstoffschicht und der zumindest fallweise erforderliche Aufwand um zu erreichen, dass das metallische Befestigungselement nicht zu sehr als Wärmebrücke wirkt und dass in den Spalt zwischen Befestigungselement und Kunststoffteil kein Wasser eindringt. Dafür ist der Kopf des Befestigungselements durch eine zusätzliche Isoliermasse oder einen Stopfen abzudecken.

Gemäß der genannten Schrift EP1693530 B1 ist das Befestigungselement aus zwei axial hintereinander liegenden Teilen, nämlich einem metallischen Gewindebolzen und einem länglichen Kopfteil aus Kunststoff, aufgebaut. Damit sind Wärmebrücke und Wasseransammlung vermeidbar. Aufgrund geringer Drehfestigkeit des Befestigungselements ist es für die Montage erforderlich das Schraubenloch vorzubohren, damit beim Einschrauben ein kleines Drehmoment ausreicht.

Gemäß der genannten Schrift EP 0644301 A2 ist das Befestigungselement ein Gewindebolzen, welcher mit dem Kunststoffteil verbunden ist, indem er bereichsweise mit Kunststoff umspritzt ist. Damit sind Wärmebrücke und Wasseransammlung bestens vermeidbar. Der Halter wird durch eine Einschraubbewegung am Gebäude fixiert, wobei das erforderliche Schraubwerkzeug am Kunststoffteil angreift. Auch bei dieser Bauweise ist es für die Montage erforderlich, das Schraubenloch vorzubohren, damit beim Einschrauben ein kleines Drehmoment ausreicht. Vor allem auch unter dem Gesichtspunkt, dass für jede Dämmstoff-Schichtdicke eine separate Baugröße des Kunststoff-Metall-Verbundteiles erforderlich ist, ist die Bauweise vergleichsweise teuer.

DE 94 10 723 U1 offenbart einen Halter mit den Merkmalen des Oberbegriffs des Anspruchs 1.

Die der Erfindung zu Grunde liegende Aufgabe besteht darin, einen Halter für das Fixieren einer Dämmstoffschicht an einer Gebäudefläche bereitzustellen, welcher sowohl kostengünstig herzustellen ist, als auch zu keinen Problemen bezüglich Wärmebrücke und eindringendem Wasser führt, und nicht zwangsweise ein Vorbohren bei der Montage erfordert.

Zum Lösen der Aufgabe wird wiederum davon ausgegangen, dass der Halter aus einem Kunststoffteil und einem metallischen Befestigungselement besteht, wobei der Kunststoffteil eine Hülse und einen koaxial zu dieser angeordneten Halteteller umfasst und das Befestigungselement ein Nagel oder eine Schraube ist, welches sich in montiertem Zustand vom zentralen Hohlraum des Kunststoffteils aus in eine feste Struktur am Gebäude hinein erstreckt.

Als erfindungsgemäße Verbesserung wird vorgeschlagen, den Kunststoffteil aus zwei miteinander verbindbaren Halbteilen auszubilden, wobei jeder der beiden Halbteile eine Nut aufweist und die Nuten der beiden Halbteile nach dem Zusammenfügen der beiden Halbteile gemeinsam einen Hohlraum bilden, welcher das Befestigungselement in seinem Umfang umfasst.

Die Einzelteile für diese Bauweise sind sehr kostengünstig herstellbar und sehr einfach zusammenfügbar. Es ist dabei sehr einfach möglich die Teile so auszubilden, dass nach dem Zusammenfügen das metallische Befestigungselement und der Kunststoffteil spaltfrei aneinander anliegen. Weiters ist es damit einfach möglich den Kopf des Befestigungselements zur Umgebung hin durch einen Bereich des Kunststoffteils abzudecken.

In einer besonders bevorzugten Ausführungsform sind die beiden Halbteile zueinander genau gleich ausgebildet und in bestimmungsgemäß miteinander verbundener Position sind sie gegeneinander um 180° um die Achse des durch sie eingeschlossenen Befestigungselements geschwenkt.

In einer besonders bevorzugten Ausführungsform ist die Verbindung zwischen den beiden Halbteilen eine Steckverbindung zwischen Vorsprüngen und Vertiefungen.

Die Erfindung wird an Hand von etwas stilisierten Zeichnungen zu einer beispielhaften, vorteilhaften Ausführungsform eines erfindungsgemäßen Halters veranschaulicht:

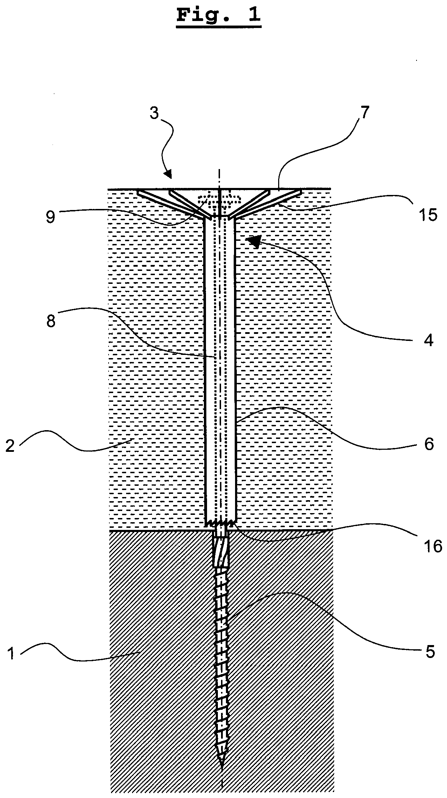

Fig. 1: zeigt in einer Teilschnittansicht einen festen Gebäudeteil 1, eine Dämmstoffschicht 2 und einen beispielhaften erfindungsgemäßen Halter 3 in bestimmungsgemäß aneinander montiertem Zustand.
Fig. 2: zeigt den Halter von Fig. 1 allein in Schrägrissansicht.
Fig. 3: zeigt den Kopfbereich eines Halbteils des Halters von Fig. 1 und Fig. 2 allein mit Blickrichtung frontal auf jene schraffiert dargestellte Fläche, mit welcher dieser Halbteil in montiertem Zustand an dem zweiten Halbteil eben anliegt. Die Schraffur wurde eingezeichnet um gute Anschaulichkeit zu erreichen, obwohl die so dargestellte Fläche keine Schnittebene ist!

Der Halter 3 besteht aus einem Kunststoffteil 4 und einem metallischen Befestigungselement 5. Der Kunststoffteil 4 besteht im Wesentlichen aus einer rohrförmigen Hülse 6 und einen im Wesentlichen kreisscheibenförmigen Halteteller 7, wobei die beiden Teile Hülse 6 und Halteteller 7 monolithisch miteinander verbunden sind, koaxial zueinander angeordnet sind und der Halteteller 7 an eine Stirnseite der Hülse 6 anschließt. Das metallische Befestigungselement 5 ist in der hier dargestellten vorteilhaften Bauweise eine selbstschneidende Schraube. In montiertem Zustand erstreckt sich die Hülse 6 durch die Dämmstoffschicht 2 hindurch, und der Halteteller 7 liegt mit seiner von der Hülse 6 abgewandten Fläche bündig zu der äußeren Oberfläche der lokal etwas komprimierten Dämmstoffschicht 2. Das metallische Befestigungselement 5 erstreckt sich durch einen zentralen Hohlraum 8 in der Hülse 6 hindurch in den durch die Dämmstoffschicht 2 abgedeckten festen Gebäudeteil 1 hinein. Der feste Gebäudeteil ist typischerweise eine Mauer oder eine an dieser montierte Unterkonstruktion. In dem hier gezeigten einfachen und vorteilhaften Fall ist der feste Gebäudeteil 1 eine Wand aus Holz.

Auch der Kopf des Befestigungselements 5 ist durch den Kunststoffteil 4 umfasst, konkret befindet er sich in einem Aufnahmehohlraum 9 im Halteteller 7. Der Aufnahmehohlraum 9 schließt stirnseitig an den zentralen Hohlraum 8 der Hülse 6 an, ist zu diesem hin offen und koaxial zu diesem angeordnet.

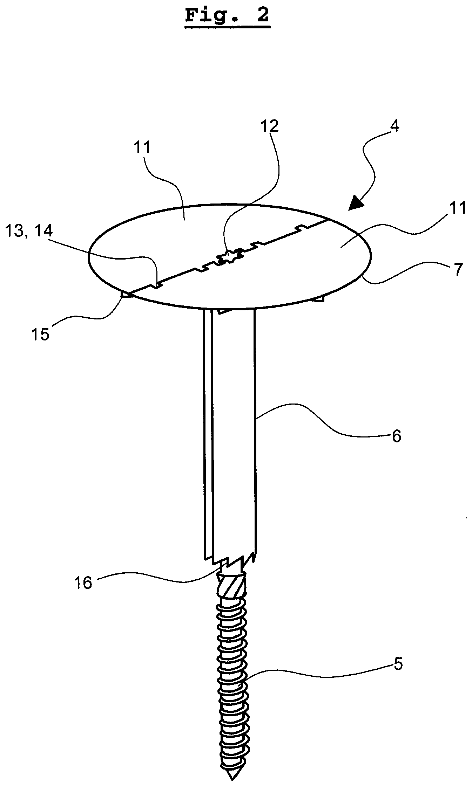

In Fig. 2 ist eine Randlinie der Berührungsfläche 10 sichtbar, an welcher die beiden Halbteile 11, welche gemeinsam den Kunststoffteil 4 bilden, aneinander anliegen.

Ebenfalls in Fig. 2 ist eine Werkzeugöffnung 12 gut erkennbar, welche die von der Hülse 6 abgewandt liegende Stirnfläche des Haltetellers 7 bis zur Mündung in den Aufnahmehohlraum 9 durchdringt. Durch die Werkzeugöffnung 12 hindurch kann das Werkzeugende eines Schraubendrehers auf den Kopf des metallischen Befestigungselements 5 einwirken. Vorzugsweise weist - wie dargestellt - die Mantelfläche der Werkzeugöffnung 12 im Halteteller 7 eine für den Eingriff eines Schraubendrehers passende Geometrie wie z.B. Innensechsrund ("Torx") oder Innensechskant ("ISK") auf. Falls das Metallische Befestigungselement 5 eine Schraube ist, welche an der freien Stirnseite ihres Kopfes eine Vertiefung für einen Werkzeugeingriff (typischerweise Torx oder ISK) aufweist, ist vorzugsweise die Mantelfläche der Werkzeugöffnung 12 im Halteteller 7 in Größe und Geometrie gleich der Mantelfläche der Vertiefung für den Werkzeugeingriff am Schraubenkopf.

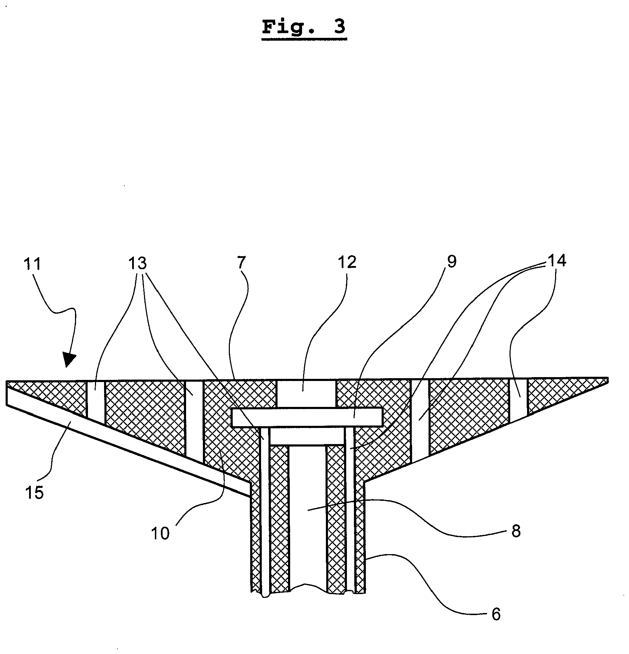

Gemäß der hier skizzierten vorteilhaften Ausführungsform sind die beiden Halbteile 11, welche gemeinsam den Kunststoffteil 4 bilden, durch Steckverbindungen aneinander fixierbar. Dazu weisen die Halbteile 11 sowohl Vorsprünge 13 und Vertiefungen 14 auf (Fig. 2 und Fig. 3), welche zueinander komplementär ausgebildet und angeordnet sind, sodass also bei den beiden bestimmungsgemäß aneinander anliegenden Halbteilen 11 die Vorsprünge 13 des einen Halbteils 11 in die Vertiefungen 14 des zweiten Halbteils 11 hinein ragen.

Die Steckverbindung zwischen den Vorsprüngen 13 und Vertiefungen 14 sollen dabei als Presspassungen ausgebildet sein, d.h. nur unter elastischer Verformung der beiden Halbteile ineinander fügbar sein und dann reibschlüssig aneinander halten. Die diesbezügliche Auslegung ist für Fachleute auf dem Gebiet der Dimensionierung und Herstellung von Kunststoffspritzgussteilen im Rahmen von deren fachlichem Handeln durchführbar, weswegen hier nicht weiter darauf eingegangen wird.

Die Hohlräume zentraler Hohlraum 8, Aufnahmehohlraum 9 und Werkzeugöffnung 12 des Kunststoffteils 4 haben an den einzelnen Halbteilen 11 jeweils die Form einer Nut, wobei die einzelnen Nuten in ihrer Längsrichtung hintereinander liegen. Zum Zusammenfügen eines Halters aus zwei Halbteilen 11 und einem metallischen Befestigungselement 5 wird erst das metallische Befestigungselement 5 so in die Hohlräume des ersten Halbteils 11 hineingelegt, dass sein Kopf im Aufnahmehohlraum 9 liegt und sein bolzenförmiger Längsteil im zentralen Hohlraum 8. Dann wird der zweite Halbteil 11 so an den ersten Halbteil 11 herangeführt und angedrückt, dass die beiden Halbteile 11 spiegelsymmetrisch bezüglich der Achse des metallischen Befestigungselements 5 zueinander angeordnet sind und aneinander anliegen. Die Position des einen Halbteils 11 ist dabei (gedanklich) in die Position des zweiten Halbteils 11 überführbar, indem er um die Achse des metallischen Befestigungselements 5, welche auch die Achse des zentralen Hohlraums 8 ist, um 180° geschwenkt wird.

Im Rahmen des Erfindungsgedankens sind natürlich sind auch andere Verbindungen als Steckverbindungen zwischen den beiden Halbteilen 11 denkbar und möglich. Beispielsweise könnten eine oder mehrere Klammern angewendet werden, welche die beiden Halbteile 11 umklammern und durch die Wirkung elastischer Vorspannung aneinander drücken.

Vorzugsweise weist der Halteteller 7 - wie dargestellt - Fräsrippen 15 an der an die Hülse 6 anschließende Fläche auf, also scharfkantige Vorsprünge, deren Kammlinien vorwiegend radial bezüglich der Achse der Hülse 6 verlaufen. Während der bestimmungsgemäßen Schraubbewegung des Halters 3 für das Befestigen einer Dämmstoffschicht 2 an einem festen Gebäudeteil 1 tragen diese Fräsrippen 15 etwas Material der Dämmstoffschicht 2 ab. Dadurch verursacht das Eindringen des Haltetellers 7 in die Dämmstoffschicht 2 weniger störende Verformungen der Dämmstoffschicht 2.

Vorzugsweise weist die vom Halteteller 7 abgewandte Stirnfläche der Hülse 6 eine Stirnverzahnung 16 auf. Während der bestimmungsgemäßen Schraubbewegung des Halters 3 für das Befestigen einer Dämmstoffschicht 2 an einem festen Gebäudeteil 1 trägt diese Stirnverzahnung 16 etwas Material von der Dämmstoffschicht 2 ab. Dadurch verursacht das Eindringen der Hülse 6 in die Dämmstoffschicht 2 weniger störende Verformungen der Dämmstoffschicht 2.

## Patentansprüche

1. Halter (3) für das Fixieren einer Dämmstoffschicht (2) an einem festen Gebäudeteil (1), wobei der Halter (3) einen Kunststoffteil (4) und ein metallisches Befestigungselement (5) umfasst, wobei der Kunststoffteil (4) eine Hülse (6) und einen Halteteller (7) umfasst und das Befestigungselement (5) ein Nagel oder eine Schraube ist und sich das Befestigungselement (5) in montiertem Zustand von einem zentralen Hohlraum (8) des Kunststoffteils (4) aus in den festen Gebäudeteil (1) hinein erstreckt, wobei der Kunststoffteil (4) aus zwei miteinander verbindbaren Halbteilen (11) besteht, **dadurch gekennzeichnet, dass**
jeder der beiden Halbteile (11) eine Nut aufweist und die Nuten der beiden Halbteile (11) nach dem Zusammenfügen der beiden Halbteile gemeinsam den zentralen Hohlraum (8) bilden, durch welche das Befestigungselement (5) in seinem Umfang umfassbar ist.

2. Halter (3) nach Anspruch 1, **dadurch gekennzeichnet, dass** das Befestigungselement (5) einen Kopf aufweist, welcher sich in einem Aufnahmehohlraum (9) im montierten Zustand im Halteteller 7 befindet, und
dass eine Werkzeugöffnung (12) die von der Hülse (6) abgewandt liegende Stirnfläche des Haltetellers (7) bis zur Mündung in den Aufnahmehohlraum (9) durchdringt, und dass der Hohlraum (8), der Aufnahmehohlraum (9) und die Werkzeugöffnung (12) des Kunststoffteils (4) an den einzelnen Halbteilen (11) jeweils die Form einer Nut haben, wobei die einzelnen Nuten in ihrer Längsrichtung hintereinander liegen.

3. Halter (3) nach Anspruch 1 oder 2, **dadurch gekennzeichnet, dass** die beiden Halbteile (11) zueinander genau gleich ausgebildet sind und in bestimmungsgemäß miteinander verbundener Position gegeneinander um 180° um die Achse des durch sie eingeschlossenen Befestigungselements (5) geschwenkt sind.

4. Halter (3) nach einem der Ansprüche 1 bis 3, **dadurch gekennzeichnet, dass** die Verbindung zwischen den beiden Halbteilen (11) eine Steckverbindung zwischen Vorsprüngen (13) und Vertiefungen (14) ist.

5. Halter (3) nach einem der Ansprüche 1 bis 4, **dadurch gekennzeichnet, dass** der Kopf des Befestigungselements (5) durch den Kunststoffteil (4) umfasst ist.

6. Halter (3) nach einem der Ansprüche 1 bis 5, **dadurch gekennzeichnet, dass** die Mantelfläche der Werkzeugöffnung (12) eine für den Eingriff eines Schraubendrehers passende Geometrie aufweist.

7. Halter (3) nach einem der Ansprüche 1 bis 6, **dadurch gekennzeichnet, dass** der Halteteller (7) an der an die Hülse (6) anschließenden Fläche Fräsrippen (15) aufweist.

8. Halter (3) nach einem der Ansprüche 1 bis 7, **dadurch gekennzeichnet, dass** die vom Halteteller (7) abgewandte Stirnfläche der Hülse (6) eine Stirnverzahnung (16) aufweist.

## Claims

1. Retainer (3) for securing an insulating layer (2) to a fixed building part (1), wherein the retainer (3) comprises a plastic part (4) and a metallic fastening element (5), wherein the plastic part (4) comprises a sleeve (6) and a retaining plate (7) and the fastening element (5) is a nail or a screw and the fastening element (5) extends from a central cavity (8) of the plastic part (4) into the fixed building part (1) in an assembled state, wherein the plastic part (4) comprises two halves (11) that can be connected to one another,
**characterised in that**
each of the two halves (11) has a notch and the notches in the two halves (11) form the central cavity (8) after the two halves are joined together, enabling the circumference of the fastening element (5) to be surrounded.

2. Retainer (3) as per Claim 1, **characterised in that** the fastening element (5) has a head that is located in a retaining cavity (9) in the retaining plate (7) in an assembled state, and that a tool opening (12) penetrates the front surface of the retaining plate (7) facing away from the sleeve (6) as far as the opening in the retaining cavity (9), and that the cavity (8), the retaining cavity (9) and the tool opening (12) of the plastic part (4) each have the form of a notch on the individual halves (11), wherein the individual notches are arranged in a row in a longitudinal direction.

3. Retainer (3) as per Claim 1 or 2, **characterised in that** the two halves (11) are identical to one another and in the intended connected position are pivoted relative to one another by 180° around the axis of the fastening element (5) enclosed by them.

4. Retainer (3) as per one of Claims 1 to 3, **characterised in that** the connection between the two halves (11) is a plug-in connection between projections (13) and depressions (14).

5. Retainer (3) as per one of Claims 1 to 4, **characterised in that** the head of the fastening element (5) is surrounded by the plastic part (4).

6. Retainer (3) as per one of Claims 1 to 5, **characterised in that** the circumferential surface of the tool opening (12) has a geometry that is suitable for the engagement of a screwdriver.

7. Retainer (3) as per one of Claims 1 to 6, **characterised in that** the retaining plate (7) has milling ribs (15) on the surface adjacent to the sleeve (6).

8. Retainer (3) as per one of Claims 1 to 7, **characterised in that** the front surface of the sleeve (6) facing away from the retaining plate (7) has spur toothing (16).

## Revendications

1. Support (3) destiné à immobiliser d'une couche de matériau isolant (2) sur un élément fixe (1) de bâtiment, le support (3) incluant une partie en plastique (4) et un élément de fixation métallique (5), la partie en plastique (4) comprenant un manchon (6) et une rondelle de retenue (7), l'élément de fixation (5) étant un clou ou une vis et l'élément de fixation (5) à l'état monté s'étendant d'une cavité centrale (8) dans la partie en plastique (4) jusque dans l'élément fixe (1) de bâtiment, la partie en plastique (4) étant composée de deux moitiés (11) pouvant être reliées,
**caractérisé en ce que**
chacune des deux moitiés (11) présente une rainure et les rainures des deux moitiés (11) forment ensemble, après l'assemblage des deux moitiés, la cavité centrale (8) au travers de laquelle l'élément de fixation (5) peut être saisi sur sa circonférence.

2. Support (3) selon la revendication 1, **caractérisé en ce que** l'élément de fixation (5) est doté d'une tête, laquelle se situe à l'état monté dans une cavité réceptrice (9) placée dans la rondelle de retenue (7), et qu'un orifice (12) pour outil pénètre depuis la face avant de la rondelle de retenue (7) ne regardant pas le manchon (6) jusqu'à l'embouchure dans la cavité réceptrice (9), et que la cavité (8), la cavité réceptrice (9) et l'orifice (12) pour outil de la partie en plastique (4) ont respectivement la forme d'une rainure sur chacune des moitiés (11), les différentes rainures reposant les unes derrières les autres dans leur direction longitudinale.

3. Support (3) selon la revendication 1 ou 2, **caractérisé en ce que** les deux moitiés (11) sont exactement identiques entre elles et sont, dans la position reliée entre elles conformément à la destination, tournées à 180° l'une de l'autre autour de l'axe de l'élément de fixation (5) qu'elles enferment.

4. Support (3) selon l'une des revendications 1 à 3, **caractérisé en ce que** la liaison entre les deux moitiés (11) est une connexion enfichable entre les protubérances (13) et les creux (14) .

5. Support (3) selon l'une des revendications 1 à 4, **caractérisé en ce que** la tête de l'élément de fixation (5) est enveloppée par la partie en plastique (4).

6. Support (3) selon l'une des revendications 1 à 5, **caractérisé en ce que** la surface enveloppante de l'orifice (12) pour outil présente une géométrie adaptée à l'introduction d'un tournevis.

7. Support (3) selon l'une des revendications 1 à 6, **caractérisé en ce que** la rondelle de retenue (7) présente des nervures de fraisage (15) sur la surface adjacente au manchon (6).

8. Support (3) selon l'une des revendications 1 à 7, **caractérisé en ce que** la face avant du manchon (6) opposée à la rondelle de retenue (7) présente une denture frontale (16).
